# EUROPÄISCHE PATENTSCHRIFT

(11) **EP 1 319 144 B1**
(45) Veröffentlichungstag und Bekanntmachung des Hinweises auf die Patenterteilung: **14.11.2007**
(21) Anmeldenummer: 01980421.0
(22) Anmeldetag: 21.09.2001
(51) Int. Cl.: F16K 11/074

(54) **KARTUSCHE FÜR EINE SANITÄRARMATUR**
CARTRIDGE FOR SANITARY APPLIANCES
CARTOUCHE POUR ROBINETTERIE SANITAIRE

(30) Priorität: 21.09.2000 DE 10046679
(43) Veröffentlichungstag der Anmeldung: 18.06.2003
(73) Patentinhaber: Hansgrohe AG, 77761 Schiltach (DE)
(72) Erfinder: LORCH, Werner, 78713 Schramberg (DE)
(74) Vertreter: Patentanwälte Ruff, Wilhelm, Beier, Dauster & Partner
(86) Internationale Anmeldenummer: PCT/EP2001/010919
(87) Internationale Veröffentlichungsnummer: WO 2002/025147

(56) Entgegenhaltungen:
- DE-A- 2 841 998
- US-A- 4 653 538
- US-A- 5 340 018
- US-A- 5 931 374

## Beschreibung

Die Erfindung geht aus von einer Kartusche für eine Sanitärarmatur. Es ist bekannt, die eigentlichen Steuerungselemente für Sanitärarmaturen in Kartuschen unterzubringen, die in sich abgeschlossen sind. Die Kartuschen enthalten üblicherweise ein durch einen Boden abgeschlossenes Gehäuse. Der Boden stellt die Flüssigkeitsverbindungen zwischen dem Inneren der Kartusche und den Wasserführungen des Armaturengehäuses her. Die Armaturengehäuse sind so konstruiert, dass sie eine Aufnahme für ein solches Kartuschengehäuse enthalten.

Es ist bereits eine Kartusche für Sanitärarmaturen bekannt (DE 19901851). Bei dieser Kartusche ist eine Scheibensteuerung vorhanden, deren Steuerscheibe mit Hilfe eines Verteilergehäuses verdreht werden kann.

Es ist bereits ein Ventil für sanitäre Anlagen bekannt (DE-A1-2841998), das eine Scheibensteuerung zum Umschalten zwischen mehreren Auslässen aufweist. Dieses Ventil enthält keine Möglichkeit der Temperatursteuerung oder Regelung.

Weiterhin ist ein Mischventil mit einer Temperatursteuerung und einer Umschalteinrichtung zwischen mehreren Auslässen bekannt. Das Ventil enthält in seiner Scheibensteuerung praktisch zwei getrennte Scheibensteuerungen für jeweils einen Auslass (US-A-4653538).

Weiterhin ist ein Mischventil mit einem Thermostaten bekannt (US-A-5931374), bei dem in einer Scheibensteuerung Einlässe für kaltes und warmes Wasser angeordnet sind. Diese führen zu einem Thermostatventil, von dem aus das Mischwasser durch eine zentrale Öffnung zum Auslass führt.

Der Erfindung liegt die Aufgabe zu Grunde, eine Kartusche zu schaffen, die auf engem Raum unterschiedliche Anwendungsmöglichkeiten bietet.

Zur Lösung dieser Aufgabe schlägt die Erfindung eine Kartusche mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Die Kartusche enthält also ein Kartuschengehäuse und eine darin angeordnete Scheibensteuerung. Zusätzlich enthält die Kartusche eine Umschalteinrichtung, um das in die Kartusche einströmende und aus dieser wieder heraustretende Wasser zwischen mindestens zwei verschiedenen Auslässen umzuschalten. Die Umschalteinrichtung kann so ausgestaltet sein, dass die beiden Auslässe nur vollständig getrennt voneinander betrieben werden können, oder auch in einer solchen Weise, dass eine gewisse Überschneidung der beiden Auslässe möglich ist.

Insbesondere kann in Weiterbildung der Erfindung vorgesehen sein, dass die Umschalteinrichtung in die Scheibensteuerung integriert ist. Dies bedeutet einen einfachen Aufbau der Kartusche und gleichzeitig auch einen geringen Platzbedarf.

In Weiterbildung der Erfindung kann vorgesehen sein, dass die Auslassöffnungen für die mindestens zwei verschiedenen Auslässe in der Verteilerscheibe der Scheibensteuerung innerhalb eines Kreises und die Einlassöffnungen für das kalte und heiße Wasser außerhalb dieses Kreises angeordnet sind. Selbstverständlich ist auch die umgekehrte Anordnung möglich. Auf diese Weise lässt sich eine einfache Trennung der unterschiedlichen Wasserführungen herstellen.

In nochmaliger weiterer Ausgestaltung der Erfindung kann vorgesehen sein, dass die Auslassöffnungen in der Verteilerscheibe als Kreissektoren ausgebildet sind.

Es kann vorgesehen sein, dass die Einlassöffnungen für das kalte und das heiße Wasser in der Verteilerscheibe als bogenförmige Schlitze konstanter Breite ausgebildet sind.

Unter Verteilerscheibe wird bei einer aus zwei Scheiben bestehenden Steuerung diejenige Steuerscheibe verstanden, die fest in dem Kartuschengehäuse angeordnet ist, während die bewegbare Steuerscheibe als Steuerscheibe bezeichnet wird.

Erfindungsgemäßβ kann vorgesehen sein, dass die Einlassöffnungen in der Steuerscheibe, die in die Wasserführungen der Kartusche führen, als bogenförmige Schlitze ausgebildet sind, deren Ränder mit den Rändern der Einlassöffnungen in der Verteilerscheibe zusammenfallen.

Es kann vorgesehen sein, dass die Bogenlänge der Einlassöffnungen in der Steuerscheibe mindestens doppelt so groß ist wie die Bogenlänge der Einlassöffnungen in der Verteilerscheibe. Dadurch ist es möglich, auch bei größerer Verdrehung der Steuerscheibe eine Verbindung mit den Einlassöffnungen herzustellen und aufrecht zu erhalten.

Erfindungsgemäß kann die Steuerscheibe zwei getrennte Auslassöffnungen aufweisen, die aber innerhalb der Steuerscheibe oder vor dieser miteinander verbunden sind, so dass beide Auslassöffnungen der bewegbaren Steuerscheibe mit einer einzigen Wasserführung innerhalb der Kartusche in Verbindung stehen. Beide Auslassöffnungen werden also gleichzeitig mit dem die Kartusche verlassenden Wasser beaufschlagt.

Auch hier kann vorgesehen sein, dass die beiden Auslassöffnungen der Steuerscheibe die Form von Kreissektoren aufweisen.

Vorzugsweise beträgt der Zentriwinkel der Kreissektoren etwa 45°°.

In weiterer Ausgestaltung der Erfindung kann vorgesehen sein, dass die Einlassöffnungen in der Steuerscheibe zu einem in der Kartusche angeordneten Thermostatventil führen, dessen Mischwasser führender Auslass mit der Auslassöffnung der Steuerscheibe verbunden ist.

Erfindungsgemäß kann vorgesehen sein, dass die Auslassöffnungen der Steuerscheibe die gleiche Größe und die gleiche Form aufweisen wie Auslassöffnungen der Verteilerscheibe.

Die von der Erfindung vorgeschlagene Kartusche kann dazu verwendet werden, den Ausgang eines Thermostatventils auf eine Kopfbrause, eine Handbrause und eine Seitenbrause zu legen bzw. zwischen diesen umzuschalten. Gleichzeitig enthält die Scheibensteuerung eine Mengensteuerung für die verschiedenen Auslässe. Die Kartusche kann so aufgebaut sein, dass sie aus einer neutralen Stellung durch Rechts- bzw. Linksdrehen die verschiedenen Auslässe öffnet. Die neutrale Stellung ist die Stellung, in der das Ventil geschlossen ist.

Weitere Merkmale, Einzelheiten und Vorzüge der Erfindung er- geben sich aus der folgenden Beschreibung einer bevorzugten Ausführungsform der Erfindung sowie an Hand der Zeichnung. Hierbei zeigen:
Fig. 1 schematisch die Anordnung eines Thermostatventils im Längsschnitt;
Fig. 2a/b perspektivisch die obere bzw. untere Seite der bewegbaren Steuerscheibe einer Scheibensteuerung;
Fig.3-6 schematisch das Zusammenwirken der Scheibensteuerung bei einer ersten Ausführungsform in vier verschiedenen Positionen;
Fig. 7-10 Darstellungen der verschiedenen Positionen bei einer zweiten Ausführungsform;
Figur 11 bis 14 stark vereinfacht verschiedene Positionen bei einer nochmals weiteren Ausführungsform.

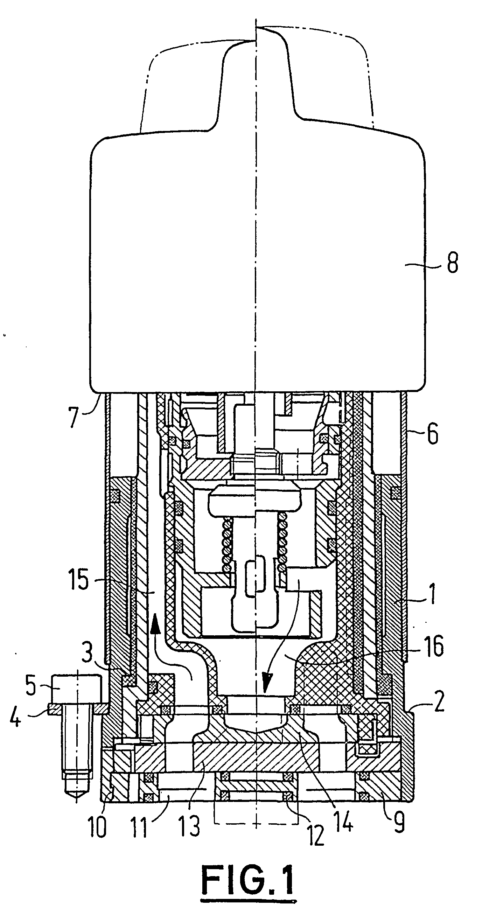

Die Figur 1 zeigt in einem durch die Achse der Armatur gelegten Axialschnitt den Aufbau einer Kartusche nach der Erfindung. Die Kartusche enthält ein Kartuschengehäuse 1, das als zylindrische Hülse ausgebildet ist. Sie weist an ihrer Außenseite und an ihrer Innenseite je eine Schulter 2, 3 auf. Mit Hilfe der äußeren Schulter 2 lässt sich das Kartuschengehäuse 1 in einem Armaturenkörper festlegen, beispielsweise mit Hilfe einer Platte 4, die mit einer Schraube 5 festgeschraubt wird. Dies ist schematisch links unten in Figur 1 dargestellt. Das Kartuschengehäuse 1 ist von einer Schutzhülse 6 umgeben, die die Kartusche optisch abdeckt. Die Schutzhülse 6 reicht bis unter den Rand 7 eines Drehgriffs 8, der zur Betätigung der Kartusche dient.

Das Kartuschengehäuse 1 wird von einem Kartuschenboden 9 abgeschlossen, der mit Hilfe von Sperrzungen 10 in dem Kartuschengehäuse gesichert ist. Der Kartuschenboden enthält Durchgangsöffnungen 11, die von Dichtungen 12 umgeben sind. Er stellt die Verbindung zu Öffnungen in dem Armaturengehäuse her.

Oberhalb des Kartuschenbodens ist in dem Kartuschengehäuse 1 eine feststehende Steuerscheibe 13 angeordnet, die auch als Verteilerscheibe bezeichnet wird. Sie besteht üblicherweise aus Keramik. Ihre dem Kartuschenboden 9 abgewandte Oberseite bildet die Steuerfläche, auf der eine bewegbare Steuerscheibe 14 flächig aufliegt. Durch die feststehende Verteilerscheibe 13 und die bewegbare Steuerscheibe 14 führen Durchgangsöffnungen hindurch, die im einzelnen noch beschrieben werden. Die Öffnungen in der Steuerscheibe 14 stehen mit Kanälen 15, 16 in Verbindung, die zur Wasserführung innerhalb der Kartusche dienen. Eine weitere Wasserführung ist in dem Schnitt der Figur 1 nicht zu sehen. Die Kartusche ist im dargestellten Beispiel so aufgebaut, dass durch den Kanal 15 und einen entsprechenden weiteren Kanal das kalte bzw. heiße Wasser zu einem Thermostatventil fließt, aus dem es dann als Mischwasser durch den Kanal 16 wieder zu der Scheibensteuerung gelangt.

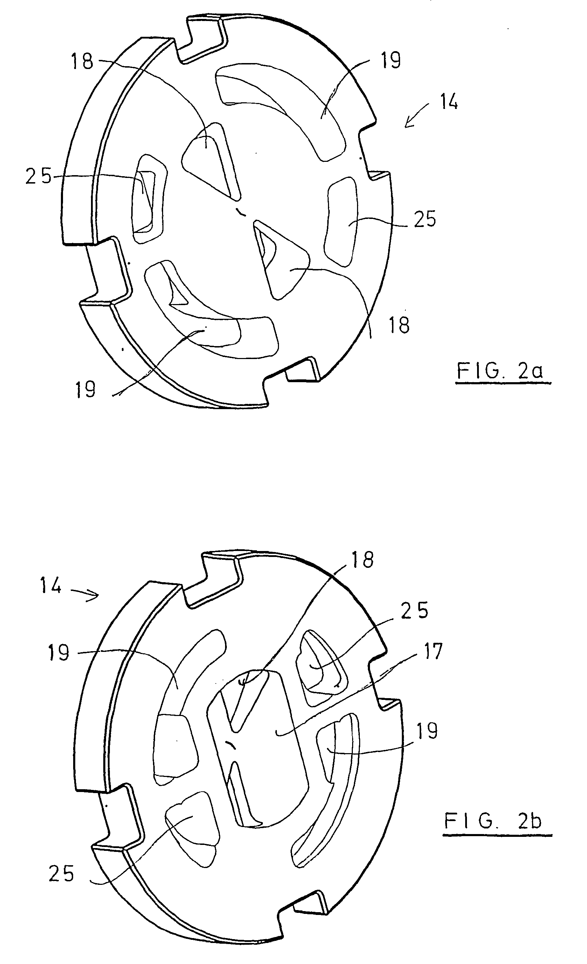

Figuren 2a und 2b zeigen perspektivisch die bewegbare Steuerscheibe 14 von schräg oben bzw. unten. In dieser Steuerscheibe 14 ist eine zentrale Öffnung 17 vorhanden, die in der Unterseite als eine einzige Öffnung ausmündet, die aber auf der gegenüberliegenden in der Steuerfläche liegenden Oberseite zwei getrennte Auslassöffnungen 18 mit je einem geschlossenen Umfang bildet. Durch die Steuerscheibe erstrecken sich zwei Öffnungen 19 in Form bogenförmiger Schlitze mit im dargestellten Ausführungsbeispiel konstanter Breite. Sowohl die Außenseite als auch die Innenseite der beiden Öffnungen liegen jeweils auf einem Kreiszylinder um die Mitte der Scheibe 14.

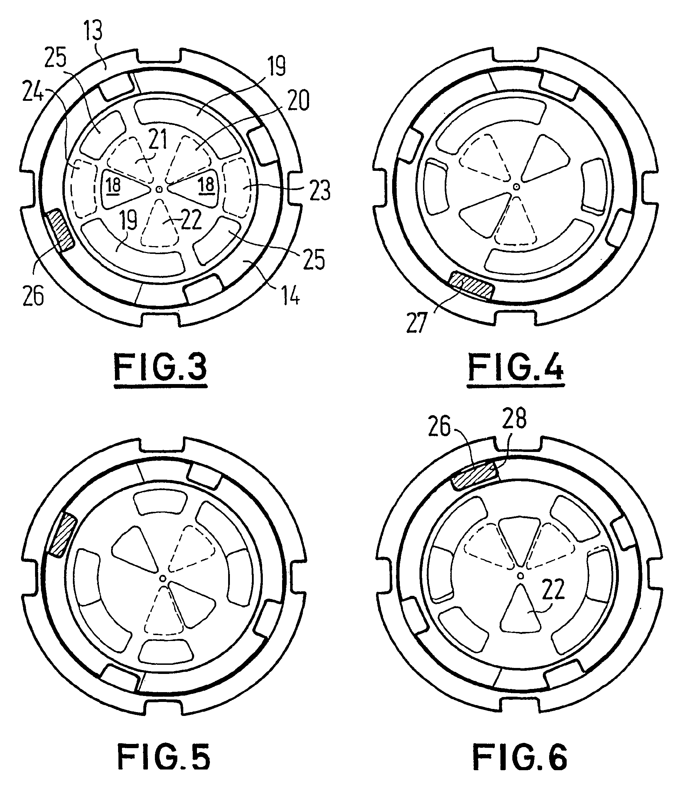

Die Figuren 3 bis 6 zeigen schematisch die gegenseitige Anordnung der Verteilerscheibe 13 und der auf ihr liegenden bewegbaren Steuerscheibe 14, wobei die Umrisse der Öffnungen so dargestellt sind, wie sie sich in der Steuerfläche darstellen, also derjenigen Ebene, in der die bewegbare Steuerscheibe 14 auf der Verteilerscheibe 13 liegt.

In der Verteilerscheibe sind drei Auslassöffnungen 20, 21 und 22 ausgebildet, die jeweils die Form eines Kreissektors mit einem Zentriwinkel von etwa 45°° aufweisen. Ihr kreisbogenförmiger Umfang liegt auf einem Kreis mit einem ersten Radius.

Außerhalb dieses Kreises sind einander diametral gegenüberliegend zwei Einlassöffnungen 23, 24 ausgebildet, von denen die eine Einlassöffnung für kaltes und die andere für warmes Wasser dient. Durch die Trennung der Orte, an denen die Einlassöffnungen 23 und 24 bzw. die Auslassöffnungen 20 bis 22 liegen, kann kein Wasser aus den Einlassöffnungen direkt in die Auslassöffnungen strömen.

Die Steuerscheibe 14 weist zwei diametral angeordnete bogenförmige Einlassöffnungen 19 auf, die als bogenförmige Schlitze ausgebildet sind. Ihre Ränder, d. h. der Außenrand und der Innenrand, liegen auf dem gleichen Kreis wie der Außenrand und Innenrand der Einlassöffnungen 23, 24 der Verteilerscheibe 11. Ihre Bogenlänge ist aber deutlich größer. An diese beiden bogenförmigen Schlitze schließen sich dann zwei weitere bogenförmige Einlassöffnungen 25 an, die die gleiche Breite und Anordung aufweisen, aber eine kürzere Bogenlänge. Wie man der Figur 3 entnehmen kann, ist in dieser Stellung keine Überdeckung von Öffnungen vorhanden. Auch die beiden getrennten Auslassöffnungen 18 der Steuerscheibe 14 liegen so, dass sie sich nicht mit den Auslassöffnungen 20, 21, 22 überdecken. Die Figur 3 zeigt die Kartusche also in geschlossener Stellung.

Wird nun mit Hilfe des Griffes 8 die Steuerscheibe aus der Position der Figur 3 im Gegenuhrzeigersinn verdreht, so gelangen allmählich die Einlassöffnungen 25 der Steuerscheibe in Überdeckung mit den Einlassöffnungen 23, 24 der Verteilerscheibe, und gleichzeitig eine der beiden Auslassöffnungen 18 in Überdeckung mit der zu der Handbrause führenden Auslassöffnung 20 der Verteilerscheibe. Diese Stellung ist in Figur 4 dargestellt. Gleichzeitig liegt ein mit der Steuerscheibe verbundener Anschlag 26 an einem Gehäuseanschlag 27 an.

Dreht man dagegen die Steuerscheibe 14 aus der neutralen Stellung der Figur 3 im Uhrzeigersinn, so wird zunächst die Stellung der Figur 5 erreicht, in der die Einlassöffnungen 23, 24 mit den Einlassöffnungen 19 der Steuerscheibe in Verbindung stehen und gleichzeitig eine der Auslassöffnungen 18 mit der zu einer Seitenbrause führenden Auslassöffnung 22 der Verteilerscheibe. Wird die Steuerscheibe nochmals im Uhrzeigersinn gedreht, so wird die Stellung der Figur 6 erreicht, in der jetzt eine der Auslassöffnungen 18 der Steuerscheibe 14 mit der z. B. zu der Kopfbrause führenden Auslassöffnung 22 der Verteilerscheibe in Verbindung steht. Auch diese Position wird durch das Anliegen des Anschlags 26 an einer Gegenfläche 28 begrenzt.

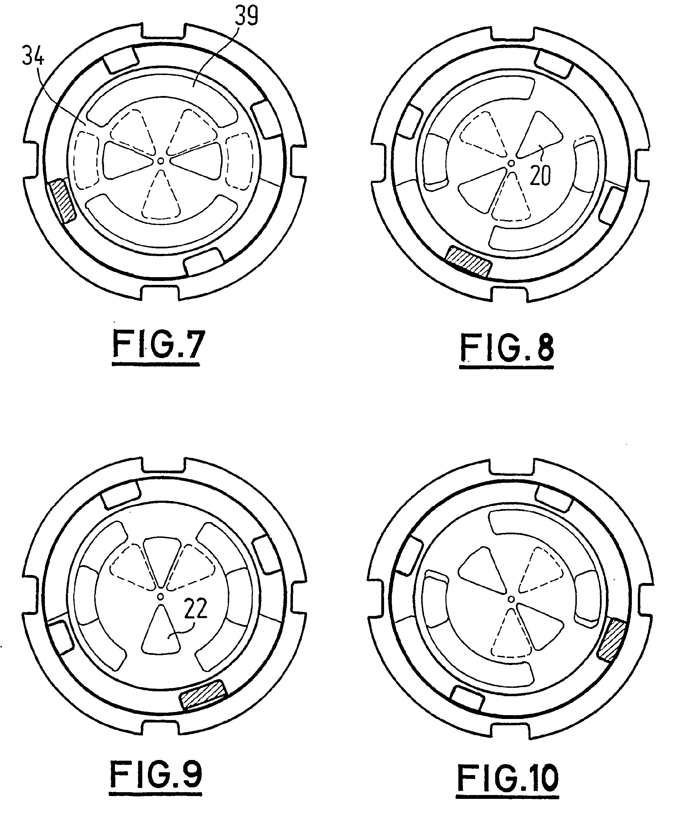

Während bei der in den Figuren 3 bis 6 dargestellten Ausführungsform die neutrale und damit geschlossene Position zwischen zwei Öffnungspositionen angeordnet ist, zeigen die Figur 7 bis 10 entsprechende Positionen bei einer Ausführungsform, in der die geschlossene und neutrale Position, siehe Figur 7, an einem Ende eines Bewegungswegs angeordnet ist. Anstelle der beiden hintereinander angeordneten Einlassöffnungen 19, 25 ist bei der Steuerscheibe 34 der Ausführungsform der Figuren 7 bis 10 eine durchgehende Einlassöffnung 39 vorhanden. In der Position der Figur 7 findet keine Überdeckung von Auslassöffnungen und Einlassöffnungen statt. Wird die Steuerscheibe 34 im Gegenuhrzeigersinn verdreht, so entsteht eine Überdeckung zwischen den Einlassöffnungen 23, 24 und den Einlassöffnungen 39 der Steuerscheibe sowie eine Überdeckung einer der Auslassöffnungen 18 der Steuerscheibe 34 mit der Auslassöffnung 20, die zu der Handbrause führt.

Beim Weiterdrehen in Gegenuhrzeigersinn erfolgt eine Überdeckung mit der anderen Auslassöffnung 18 der Steuerscheibe und der Auslassöffnung 22, die zu der Kopfbrause führt.

Beim nochmaligen Weiterdrehen entsteht die Position der Figur 10, wo die Seitenbrause eingeschaltet ist.

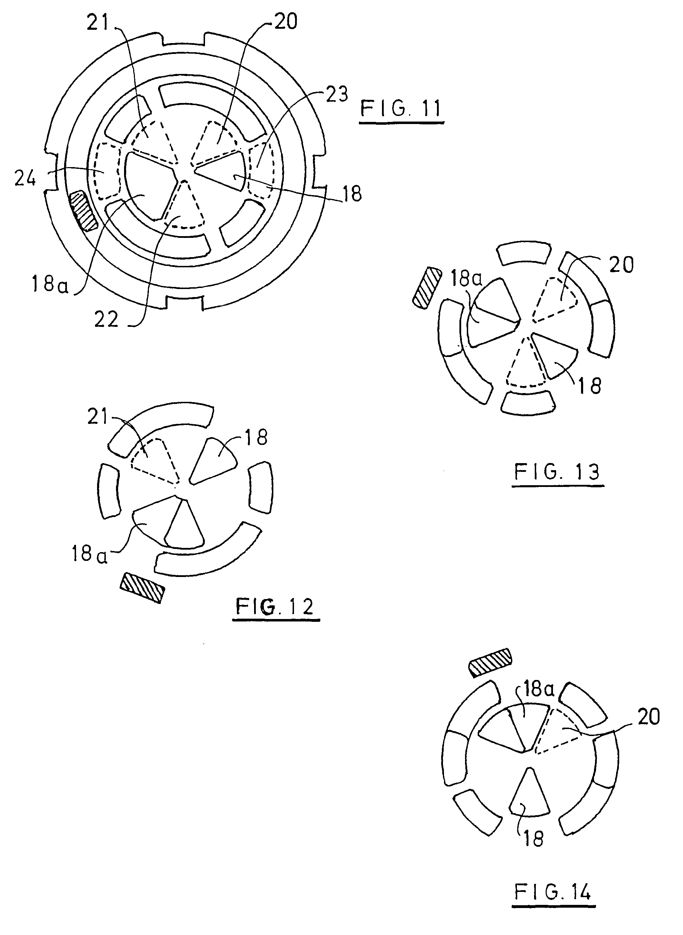

Figur 11 zeigt eine der Figur 3 entsprechende Darstellung, bei der die bewegbare Steuerscheibe ebenfalls zwei Auslassöffnungen 18, 18a aufweist, von denen die eine 18a sich aber über einen größeren Kreissektor erstreckt als die andere. Figur 11 zeigt die Position, in der sowohl die in radialer Richtung weiter außen liegenden Einlassöffnungen 23, 24 als auch die Auslassöffnungen 20, 21, 22 der feststehenden Steuerscheibe geschlossen sind. Wird nun die bewegbare Steuerscheibe im Gegenuhrzeigersinn verdreht, siehe Figur 12, so wird die eine Auslassöffnung 22 der feststehenden Steuerscheibe mit der Auslassöffnung 18a der bewegbaren Steuerscheibe in Übereinstimmung gebracht, wobei gleichzeitig die zweite Auslassöffnung 18 mit der Auslassöffnung 20 der feststehenden Steuerscheibe in Übereinstimmung gebracht wird. Das Wasser strömt also jetzt durch die Öffnungen 20 und 22 nach außen.

Wird die bewegbare Steuerscheibe dagegen aus der geschlossenen Position der Figur 11 in die Position der Figur 13 im Uhrzeigersinn verdreht, so wird die Öffnung 21 in der feststehenden Steuerscheibe geöffnet, so dass das Wasser jetzt aus einem zweiten Ausgang aus der Mischerkartusche heraus strömen kann. In Figur 12 wird beispielsweise eine Handbrause eingeschaltet, und in Figur 13 eine andere Brause. Bei nochmaliger Weiterdrehung im Uhrzeigersinn entsteht die Position der Figur 14, wo sowohl die Öffnung 21 als auch die Öffnung 22 der feststehenden Steuerscheibe mit den Einlassöffnungen in Verbindung stehen. Hier ist also sowohl die eine als auch die andere Brause gleichzeitig in Betrieb.

## Patentansprüche

1. Kartusche für Sanitärarmaturen, mit
1.1 einem Kartuschengehäuse (1),
1.4 einer in diesem angeordneten Scheibensteuerung mit einer festen Verteilerscheibe (13) und einer verdrehbaren Steuerscheibe (14, 34), sowie mit
1.5 einer in die Scheibensteuerung integrierten Umschalteinrichtung zum Umschalten zwischen mindestens zwei verschiedenen Auslässen, die
1.4 mindestens eine Einlassöffnung und mindestens eine Auslassöffnung in der Steuerscheibe (14, 34) und für jeden Auslass je mindestens eine Auslassöffnung in der Verteilerscheibe (13) aufweist.
**dadurch gekennzeichnet, dass**
1.5 die Einlassöffnungen (19, 25, 39) in der Steuerscheibe (14, 34) zu einem in der Kartusche angeordneten Thermostatventil führen,
1.6 dessen Auslass mit der Auslassöffnung (18) der Steuerscheibe (14, 34) verbunden ist, und dass
1.7 die Auslassöffnungen (20, 21, 22) in der Verteilerscheibe (13) als Kreissektoren ausgebildet sind.

2. Kartusche nach Anspruch 1, bei der die Auslassöffnungen (20, 21, 22) für die verschiedenen Auslässe in der Verteilerscheibe (13) der Scheibensteuerung innerhalb eines Kreises und die Einlassöffnungen (23, 24) für das kalte und das heiße Wasser außerhalb dieses Kreises angeordnet sind.

3. Kartusche nach einem der vorhergehenden Ansprüche, bei der die Einlassöffnungen (23, 24) in der Verteilerscheibe (13) als bogenförmige Schlitze konstanter Breite ausgebildet sind.

4. Kartusche nach einem der vorhergehenden Ansprüche, bei der die Einlassöffnungen (19, 25, 34) in der Steuerscheibe (14, 34) als bogenförmige Schlitze ausgebildet sind, deren Ränder mit den Rändern der Einlassöffnungen (23, 24) in der Verteilerscheibe (13) zusammenfallen.

5. Kartusche nach Anspruch 4, bei der die Bogenlänge der Einlassöffnungen (19, 34) in der Steuerscheibe (14, 34) mindestens doppelt so groß ist wie die Bogenlänge der Einlassöffnungen (23, 24) in der Verteilerscheibe (13).

6. Kartusche nach einem der vorhergehenden Ansprüche, bei der die Steuerscheibe (14) zwei getrennte Auslassöffnungen (18) aufweist, die innerhalb der Steuerscheibe (14) oder vor dieser miteinander verbunden sind.

7. Kartusche nach Anspruch 6, bei der die beiden Auslassöffnungen (18) der Steuerscheibe (14) Kreissektorform aufweisen.

8. Kartusche nach einem der vorhergehenden Ansprüche, bei der die Auslassöffnungen der Steuerscheibe (14, 34) gleiche Größe und Form aufweisen wie die Auslassöffnungen (20, 21, 22) der Verteilerscheibe (13).

## Claims

1. A cartridge for sanitary appliances, with
1.1 a cartridge housing (1),
1.2 a disc control located in said disc with a stationary distributing disc (13) and a rotatable control disc (14, 34), as well as
1.3 a changeover device integrated within the disc control, for switching over between at least two different outlets, which
1.4 features at least one inlet opening and at least one outlet opening within the control disc (14, 34) and for each outlet at least one outlet opening each in the distributing disc (13),
**characterised in that**
1.5 the inlet openings (19, 25, and 39) within the control disc (14, 34) lead to a thermostatic valve located within the cartridge,
1.6 of which the outlet is connected with the outlet opening (18) of the control disc (14, 34), and that
1.7 the outlet openings (20, 21, 22) within the distributing disc (13) are formed as circular sectors.

2. A cartridge according to Claim 1, wherein the outlet openings (20, 21, 22) for different outlets in the distributing disc (13) of the disc control are located within a circle and the inlet openings (23, 24) for cold and hot water are located outside this circle.

3. A cartridge according to one of the preceding claims, wherein the inlet openings (23, 24) in the distributing disc (13) are formed as arch-shaped slits with constant width.

4. A cartridge according to one of the preceding claims, wherein the inlet openings (19, 25, and 34) are formed within the control disc (14, 34) as arch-shaped slits, of which the edges coincide with the edges of the inlet openings (23, 24) inside the distributing disc (13).

5. A cartridge according to Claim 4, wherein the arch length of the inlet opening (19, 34) within the control disc (14, 34) is at least twice as large as the arch length of the inlet openings (23, 24) within the distributing disc (13).

6. A cartridge according to one of the preceding claims, wherein the control disc (14) features two separate outlet openings (18), which are connected with one another within or in front of the control disc (14).

7. A cartridge according to Claim 6, wherein the two outlet openings (18) of the control disc (14) feature the shape of a circular sector.

8. A cartridge according to one of the preceding claims, wherein the outlet openings of the control disc (14, 34) feature the same size and shape as the outlet openings (20, 21, and 22) of the distributing disc (13).

## Revendications

1. Cartouche pour robinetteries sanitaires, comprenant
1.1 un corps de cartouche (1),
1.2 une commande à disque disposée dans celui-ci, munie d'un disque de distribution (13) fixe et d'un disque de commande pivotant (14, 34) ainsi qu'
1.3 un dispositif de commutation intégré dans la commande à disque, destiné à commuter entre au moins deux sorties différentes, qui
1.4 présente au moins un orifice d'entrée et au moins un orifice de sortie dans le disque de commande (14, 34) et au moins respectivement une orifice de sortie dans le disque de distribution (13) pour chaque sortie,
**caractérisée en ce que**
1.5 les orifices d'entrée (19, 25, 39) dans le disque de commande (14, 34) conduisent à une vanne thermostatique disposée dans la cartouche,
1.6 dont la sortie est reliée à l'orifice de sortie (18) du disque de commande (14, 34), et **en ce que**
1.7 les orifices de sortie (20, 21, 22) dans le disque de distribution (13) sont exécutés en tant que secteurs circulaires.

2. Cartouche selon la revendication 1, dans laquelle les orifices de sortie (20, 21, 22) pour les différentes sorties dans le disque de distribution (13) de la commande à disque sont disposés à l'intérieur d'un cercle et les orifices d'entrée (23, 24) pour l'eau chaude et l'eau froide sont disposés à l'extérieur de ce cercle.

3. Cartouche selon l'une quelconque des revendications précédentes, dans laquelle les orifices d'entrée (23, 24) dans le disque de distribution (13) sont exécutés en tant que fentes arquées de largeur constante.

4. Cartouche selon l'une quelconque des revendications précédentes, dans laquelle les orifices d'entrée (19, 25, 34) dans le disque de distribution (14, 34) sont exécutés en tant que fentes arquées dont les bords coïncident avec les bords des orifices d'entrée (23, 24) dans le disque de distribution (13).

5. Cartouche selon la revendication 4, dans laquelle la longueur d'arc des orifices d'entrée (19, 34) dans le disque de commande (14, 34) est au moins le double de la longueur d'arc des orifices d'entrée (23, 24) dans le disque de distribution (13).

6. Cartouche selon l'une quelconque des revendications précédentes, dans laquelle le disque de commande (14) présente deux orifices de sortie (18) séparés, qui sont reliés entre eux dans le disque de commande (14) ou devant celui-ci.

7. Cartouche selon la revendication 6, dans laquelle les deux orifices de sortie (18) du disque de commande (14) présentent la forme de secteurs circulaires.

8. Cartouche selon l'une quelconque des revendications précédentes, dans laquelle les orifices de sortie du disque de commande (14, 34) présentent la même taille et la même forme que les orifices de sortie (20, 21, 22) du disque de distribution (13).
